# EUROPEAN PATENT APPLICATION

(11) **EP 2 781 495 A2**
(43) Date of publication of application: **24.09.2014**
(21) Application number: 13195252.5
(22) Date of filing: 02.12.2013
(51) Int. Cl.: C04B 41/63

(54) **Building board and method for producing building board**

(30) Priority: 19.03.2013 JP 2013056833
(71) Applicant: Nichiha Corporation, Nagoya-shi, Aichi 455-8550 (JP)
(72) Inventor: Imai, Toshio, Nagoya-shi, Aichi 455-8550 (JP); Yamamoto, Hiroaki, Nagoya-shi, Aichi 455-8550 (JP)
(74) Representative: Isarpatent

(57) **Abstract**

A building board includes an inorganic board having a surface covered by an insulating coating film containing a coating film forming material and organic hollow particles, wherein the organic hollow particles have an average particle size in the range of 5 to 50 µm and an average hollow ratio of 80% or more, and the insulating coating film contains 0.01 to 5.0 parts by mass of the organic hollow particles per 100 parts by mass of solid content thereof, and has an average thickness of 5 to 500 µm. The method for producing a building board includes: applying, onto a surface of an inorganic board, an insulating coating material containing a coating film forming material and organic hollow particles; and drying the insulating coating material to form an insulating coating film.

## Description

### BACKGROUND OF THE INVENTION

### 1. Field of the Invention

The present invention relates to a building board that is suitable for wall materials, roof materials and the like, and a method for producing such a building board.

### 2. Description of Related Art

Conventionally, inorganic boards composed mainly of a hydraulic inorganic powder such as cement and wood reinforcement such as wood pulp fiber have been used. These inorganic boards have excellent physical properties including, for example, flexural strength, and thus are used as building boards such as interior wall materials, exterior wall materials, roof materials and the like of residential houses after they are subjected to coating.

However, in view of the recent environmental issues, including, for example, those related to energy saving, there is a need for an improved thermal insulation effect for residential houses. To this end, investigations have been made to increase the thermal insulation effect for residential houses by forming an insulating coating film on the surface of a building board. For example, JP 2000-71389A discloses an insulating wall material obtained by forming, on the surface of a substrate, an insulating coating film in which a ceramic fine powder having thermal insulation properties is mixed with and dispersed in a coating film forming material.

However, the experiments carried out by the present inventors have demonstrated that a building board having formed thereon an insulating coating film containing the dispersed and mixed ceramic fine powder as in the case of JP 2000-71389A actually has a small thermal insulation effect (see the comparative examples described below). As a result of in-depth studies carried out by the inventors, it has been found that one of the causes lies in that the ceramic fine powder tends not to provide a thermal insulation effect because its hollow ratio is prone to be low. Additionally, the ceramic fine powder has a large particle size, and thus the surface of a coating film formed therefrom has no smoothness, resulting in a poor appearance in terms of design quality.

### SUMMARY OF THE INVENTION

Therefore, it is an object of the present invention to provide a building board having excellent thermal insulation properties and design quality, and a method for producing the same.

The present invention provides a building board including an inorganic board having a surface covered by an insulating coating film containing a coating film forming material and organic hollow particles. The organic hollow particles have an average particle size in the range of 5 to 50 µm and an average hollow ratio of 80% or more. The insulating coating film contains 0.01 to 5.0 parts by mass of the organic hollow particles per 100 parts by mass of solid content thereof, and has an average thickness of 5 to 500 µm. Acrylic resin, silicone resin, fluororesin, acrylic silicone resin, polyurethane resin, epoxy resin, polysiloxane resin and the like can be used as the coating film forming material. Although any organic compound may be used as the material for the organic hollow particles, it is preferable that the organic hollow particles include at least one of acrylonitrile, methacrylonitrile, vinylidene chloride, acrylic acid ester, and styrene because the state in which the hollow ratio is high can be maintained. Further, it is preferable that the insulating coating film contains a water-soluble solvent because the coating film formed can easily be homogeneous in the process of forming the insulating coating film when the coating material forming the insulating coating film contains a water-soluble solvent. In that case, it is preferable that the water-soluble solvent includes at least one of a glycol-based solvent and a glycol ether-based solvent because these solvents contribute to homogenization. Examples of the inorganic board include ceramic siding boards such as a wood fiber-reinforced cement board, a fiber-reinforced cement board, a fiber-reinforced cement calcium silicate board and a slag gypsum board, metallic siding boards, and ALC boards. Ceramic siding boards are preferable because they increase the thermal insulation effect significantly. Furthermore, it is preferable that the insulating coating film is formed as an outermost layer in the building board in order to make the design quality of the surface of the insulating coating film pronounced.

The present invention also provides a method for producing a building board, including: applying, onto a surface of an inorganic board, an insulating coating material containing a coating film forming material and organic hollow particles; and drying the insulating coating material to form an insulating coating film. The method is characterized in that a coating material containing 0.01 to 5.0 parts by mass of organic hollow particles having an average particle size in the range of 5 to 50 µm and an average hollow ratio of 80% or more, per 100 parts by mass of solid content of the coating material is used as the insulating coating material, and the coating material is dried such that the insulating coating film has an average thickness of 5 to 500 µm. As the coating film forming material, it is possible to use, for example, acrylic resin, silicone resin, fluororesin, acrylic silicone resin, polyurethane resin, epoxy resin, and polysiloxane resin. It is preferable that the organic hollow particles include at least one of acrylonitrile, methacrylonitrile, vinylidene chloride, acrylic acid ester, and styrene. Further, it is preferable that the insulating coating material contains a water-soluble solvent because the insulating coating film formed can easily be homogeneous. In that case, it is preferable that the water-soluble solvent includes at least one of a glycol-based solvent and a glycol ether-based solvent because these contribute to homogenization. Examples of the inorganic board include ceramic siding boards such as a wood fiber-reinforced cement board, a fiber-reinforced cement board, a fiber-reinforced cement calcium silicate board and a slag gypsum board, metallic siding boards, and ALC boards. It is preferable to perform the production method of the present invention on ceramic siding boards because the thermal insulation effect increases remarkably. In order to make the design quality of the surface of the insulating coating film pronounced, it is preferable that insulating coating film is formed as an outermost layer in the building board.

According to the present invention, it is possible to provide a building board having excellent thermal insulation properties and design quality, and a method for producing the same.

### DETAILED DESCRIPTION OF THE INVENTION

Hereinafter, an embodiment of the present invention will be specifically described.

A building board according to the present invention is characterized in that the surface of an inorganic board is covered by an insulating coating film containing a coating film forming material and organic hollow particles.

Examples of the inorganic board include ceramic siding boards such as a wood fiber-reinforced cement board, a fiber-reinforced cement board, a fiber-reinforced cement calcium silicate board and a slag gypsum board, metallic siding boards, and ALC boards. In the present invention, it is preferable that the inorganic board is a ceramic siding board because this significantly improves the thermal insulation effect provided by the insulating coating film. Note that although the insulating coating film may be formed directly on the surface of the inorganic board, a sealer coating film may be formed on the inorganic board, and the insulating coating film may be formed thereon. The sealer coating film may be formed, for example, using an acrylic emulsion, an acrylic urethane resin-based coating material, an epoxy resin-based coating material, a solvent-type moisture-curable urethane, a water-dispersible isocyanate, or the like. The sealer coating film may be formed in a single layer, or may be formed in two or more layers. Note that a board having a flat surface or a board having a surface with an irregular pattern may be used as the inorganic board.

Examples of the coating film forming material contained in the insulating coating film that covers the surface of the inorganic board include acrylic resin, silicone resin, fluororesin, acrylic silicone resin, polyurethane resin, epoxy resin, and polysiloxane resin.

Although the organic hollow particles contained in the insulating coating film may be made of any organic material, it is essential for the organic hollow particles to have an average particle size in the range of 5 to 50 µm and an average hollow ratio of 80% or more. The reason that the average particle size of the organic hollow particles is in the range of 5 to 50 µm is that an average particle size less than 5 µm cannot provide a sufficient thermal insulation effect, and an average particle size greater than 50 µm causes a reduction in the strength of the insulating coating film formed, giving rise to such concerns that the insulating coating film is brittle and the coating film adhesion failure tends to occur. The reason that the average hollow ratio of the organic hollow particle is 80% or more is that an average hollow ratio less than 80% cannot provide a sufficient thermal insulation effect. A preferable upper limit of the average hollow ratio varies depending on various factors under the condition that the hollow state of the organic hollow particles can be maintained. However, it is preferable that the average hollow ratio is 90% or more because the insulating coating film can achieve a greater thermal insulation effect. Note that the "average hollow ratio" is a value in volume percentage. To obtain these average particle size and hollow ratio, the hollow particles need to be an organic material. More specifically, an organic material is flexible and thus stretches during formation of hollow particles, so that the average hollow ratio becomes as high as 80% or more, and that state can be maintained. It is preferable that the organic hollow particles include at least one of acrylonitrile, methacrylonitrile, vinylidene chloride, acrylic acid ester, and styrene because excellent durability and thermal insulation can be achieved.

In the present invention, the insulating coating film contains 0.01 to 5.0 parts by mass of the organic hollow particles per 100 parts by mass of solid content thereof and has an average thickness of 5 to 500 µm. The reason that the insulating coating film contains 0.01 to 5.0 parts by mass of the organic hollow particles per 100 parts by mass of solid content thereof is as follows. Organic hollow particles in an amount less than 0.01 part by mass cannot provide a sufficient thermal insulation effect, and organic hollow particles in an amount greater than 5.0 parts by mass causes a reduction in the strength of the insulating coating film formed, giving rise to such concerns that the insulating coating film is brittle and the coating film adhesion failure tends to occur. Note that the organic hollow particle content represents the ratio of the organic solid content forming a film of the organic hollow particles, per 100 parts by mass of the solid content constituting the entire insulating coating film. The reason that the average thickness of the insulating coating film is 5 to 500 µm is as follows. An average thickness less than 5 µm cannot provide a sufficient thermal insulation effect, and an average thickness greater than 500 µm causes a reduction in the strength of the insulating coating film formed and an increase in the drying time. In the case of an inorganic board having a surface with a design pattern, the irregularities in the pattern will be embedded, resulting in alternation of the appearance.

Further, according to the present invention, the insulating coating film can be made more homogeneous during the process of forming the insulating coating film when the coating material for forming the insulating coating film contains a water-soluble solvent. Thus, the insulating coating film may contain a water-soluble solvent. In that case, it is preferable that the water-soluble solvent includes at least one of a glycol-based solvent and a glycol ether-based solvent because these solvents contribute more to homogenization.

Note that, in the present invention, it is preferable, in terms of design quality, that the insulating coating film is formed as an outermost layer in the building board because the suitable surface state and gloss of the insulating coating film are exposed.

In the method for producing a building board according to the present invention, an insulating coating material containing a coating film forming material and organic hollow particles is applied onto the surface of an inorganic board, and dried to form an insulating coating film. The inorganic board and the coating film forming material are as described above. Here, in the method for producing a building board according to the present invention, a coating material containing 0.01 to 5.0 parts by mass of organic hollow particles having an average particle size in the range of 5 to 50 µm and an average hollow ratio of 80% or more, per 100 parts by mass of the solid content of the coating material is used as the insulating coating material, and the coating material is dried such that the insulating coating film has an average thickness of 5 to 500 µm. The reason that the hollow particles having an average particle size in the range of 5 to 50 µm and an average hollow ratio of 80% or more are used for the insulating coating material is as follows. As described above, when the hollow particles have an average particle size less than 5 µm or an average hollow ratio less than 80%, the insulating coating film formed does not provide a sufficient thermal insulation effect. Hollow particles having an average particle size greater than 50 µm causes a reduction in the strength of the formed insulating coating film, giving rise to such concerns that the insulating coating film is brittle and the coating film adhesion failure tends to occur. To meet these average particle size and average hollow ratio and maintain that state, the hollow particles need to be an organic material. In view of the durability and the thermal insulation properties, it is preferable that the hollow particles include at least one of acrylonitrile, methacrylonitrile, vinylidene chloride, acrylic acid ester, and styrene.

Further, in the method for producing a building board according to the present invention, a coating material containing 0.01 to 5.0 parts by mass of the organic hollow particles per 100 parts by mass of the solid content of the coating material is used as the insulating coating material. The reason that the coating material having an organic hollow particle content of 0.01 parts by mass or more per 100 parts by mass of the solid content of the coating material is that when the organic hollow particle content is less than 0.01 parts by mass, the thermal insulation effect of the insulating coating film formed is not sufficient. The reason that the organic hollow particle content is 5.0 parts by mass or less is that an organic hollow particle content greater than 5.0 parts by mass causes a reduction in the strength of the insulating coating film formed, giving rise to such concerns that the insulating coating film is brittle and the coating film adhesion failure tends to occur. Note that the organic hollow particle content represents the ratio of the organic solid content forming a film of the organic hollow particles, per 100 parts by mass of the solid content constituting the insulating coating material.

In the method for producing a building board according to the present invention, the above-described insulating coating material is applied and dried to form an insulating coating film having an average thickness of 5 to 500 µm. Various methods including, for example, spray coating, roll coater coating, curtain coater coating, and dip coating may be used as the method for applying the coating material, and any of such methods may be used as long as the dried insulating coating film has an average thickness of 5 to 500 µm. The reason that the average thickness of the insulating coating film is 5 to 500 µm is as follows. When an average thickness is less than 5 µm, the thermal insulation effect of the insulating coating film formed is not sufficient. An average thickness greater than 500 µm causes a reduction in the strength of the insulating coating film formed and an increase in the drying time. In the case of an inorganic board having a design pattern on its surface, the irregularities of the pattern will be embedded, resulting in alteration of the appearance. It is more preferable that the insulating coating film has an average thickness of 30 to 500 µm because excellent hiding power can be achieved. There is no particular limitation with respect to the drying as long as the insulating coating film can be formed. In view of forming the insulating coating film while reliably maintaining the hollow structure of the organic hollow particles, it is preferable that the temperature of the coating film during drying is 130°C or lower. In view of the heat-resisting properties of the organic hollow particles, it is more preferable that the above-described temperature is 40 to 110°C.

Further, it is preferable that the insulating coating material contains a water-soluble solvent because the insulating coating film formed can easily be homogeneous. More specifically, when the above-described organic hollow particles having a high thermal insulation effect are mixed, there is a problem that heat tends not to be conducted uniformly throughout the coating film during drying after the application of the insulating coating material onto the inorganic board. Therefore, using an insulating coating material containing a water-soluble solvent enables heat to be conducted, during drying, throughout the entire coating film that is being formed. This makes it possible to form a homogeneous insulating coating film and achieve a uniform thermal insulation effect throughout the building board by the insulating coating film, thus improving the overall thermal insulation properties of the building board. As the water-soluble solvent, it is possible to use, for example, ethylene glycol, propylene glycol, diethylene glycol, dipropylene glycol N-butyl ether, and tripropylene glycol monomethyl ether, or a mixture thereof. In that case, the temperature of the coating film during application and drying of the insulating coating material is set to be lower than the boiling point of the water-soluble solvent. By doing so, the water-soluble solvent remains in a sufficient amount even after being subjected to drying, and thus can contribute to the formation of a homogeneous insulating coating film. It is preferable that the water-soluble solvent includes at least one of a glycol-based solvent and a glycol ether-based solvent because these solvents have high boiling points and thus are likely to remain until the end of the process of forming the insulating coating film and contribute to homogenization of the insulating coating films. Additionally, it is preferable that the water-soluble solvent is contained in an amount of 0.1 to 10 parts by mass per 100 parts by mass of the solid content of the insulating coating material because this allows the entire insulating coating film to be reliably formed as a homogeneous film.

Note that the color tone of the insulating coating film can be adjusted using a pigment. That is, a coating material containing a pigment or a coating material containing no pigment may be used as the insulating coating material.

Furthermore, in the method for producing a building board according to the present invention, it is preferable, in terms of design quality, that the insulating coating film is formed by applying the insulating coating material on the outermost side of the building board and drying the insulating coating material because the suitable surface state and gloss of the insulating coating film are exposed.

Hereinafter, examples of the present invention will be described.

An aqueous white coating material composed mainly of acrylic resin was applied in a thickness of 16 mm onto the surface of an inorganic board (wood fiber-reinforced cement board), and dried for about 5 minutes using a dryer at about 80°C, to form a sealer layer. Then, each of the insulating coating materials listed in Table 1 is applied onto the surface of the sealer layer, and dried for about 5 minutes using a dryer at about 80°C, to produce building boards of Examples 1 to 6 and Comparative Examples 1 to 6. Note that inorganic boards provided with a brick pattern on their surfaces were used for Example 6 and Comparative Example 6, and inorganic boards provided with a flat pattern on their surfaces were used for the other examples.

The details of the building boards are as described in Table 1.

More specifically, in Example 1, an insulating coating film having a thickness of 50 µm was formed using, as the insulating coating material, a coating material containing an acrylic silicone emulsion as the coating material forming material, 2.0 parts by mass of particles made of acrylonitrile and having an average particle size of 15 µm and an average hollow ratio of 98% as the hollow particles, and 2.0 parts by mass of ethylene glycol as the water-soluble solvent, and having been toned with titanium oxide.

In Example 2, an insulating coating film having a thickness of 30 µm was formed using, as the insulating coating material, a coating material containing an acrylic silicone emulsion as the coating film forming material, 5.0 parts by mass of particles made of vinylidene chloride and acrylonitrile and having an average particle size of 20 µm and an average hollow ratio of 98% as the hollow particles, and 0.2 parts by mass of propylene glycol as the water-soluble solvent, and having been toned with titanium oxide.

In Example 3, an insulating coating film having a thickness of 500 µm was formed using, as the insulating coating material, a coating material containing an acrylic silicone emulsion as the coating film forming material, 0.5 parts by mass of particles made of methacrylonitrile and methyl acrylate and having an average particle size of 40 µm and an average hollow ratio of 98% as the hollow particles, and 10 parts by mass of diethylene glycol as the water-soluble solvent, and having been toned with titanium oxide.

In Example 4, an insulating coating film having a thickness of 50 µm was formed using, as the insulating coating material, a coating material containing an acrylic emulsion as the coating film forming material, 2.0 parts by mass of particles made of acrylonitrile and having an average particle size of 15 µm and an average hollow ratio of 98% as the hollow particles, and 2.0 parts by mass of ethylene glycol as the water-soluble solvent, and having been toned with titanium oxide and iron oxide (red).

In Example 5, an insulating coating film having a thickness of 50 µm was formed using, as the insulating coating material, a coating material containing a fluororesin emulsion as the coating film forming material, 2.0 parts by mass of particles made of acrylonitrile and having an average particle size of 15 µm and an average hollow ratio of 98% as the hollow particles, and 2.0 parts by mass of ethylene glycol as the water-soluble solvent, and having been toned with titanium oxide and iron oxide (yellow).

In Example 6, an insulating coating film having a thickness of 500 µm was formed using, as the insulating coating material, a coating material containing an acrylic silicone emulsion as the coating film forming material, and 2.0 parts by mass of particles made of acrylonitrile and having an average particle size of 15 µm and an average hollow ratio of 98% as the hollow particles, and having been toned with titanium oxide.

Meanwhile, in Comparative Example 1, an insulating coating film having a thickness of 20 µm was formed using, as the insulating coating material, a coating material containing an acrylic silicone emulsion as the coating film forming material, and having been toned with titanium oxide. In other words, in Comparative Example 1, the coating film was formed using a coating material containing no hollow particles and no water-soluble solvent.

In Comparative Example 2, an insulating coating film having a thickness of 50 µm was formed using, as the insulating coating material, a coating material containing an acrylic silicone emulsion as the coating film forming material, 5.0 parts by mass of particles made of ceramic and having an average particle size of 150 µm and an average hollow ratio of 30% as the hollow particles, and 2.0 parts by mass of propylene glycol as the water-soluble solvent, and having been toned with titanium oxide.

In Comparative Example 3, an insulating coating film having a thickness of 100 µm was formed using, as the insulating coating material, a coating material containing an acrylic silicone emulsion as the coating film forming material, 2.0 parts by mass of particles made of methyl acrylate and having an average particle size of 20 µm and an average hollow ratio of 0% (solid), and 2.0 parts by mass of ethylene glycol as the water-soluble solvent, and having been toned with titanium oxide.

In Comparative Example 4, an insulating coating film having a thickness of 20 µm was formed using, as the insulating coating material, a coating material containing an acrylic emulsion as the coating film forming material and having been toned with titanium oxide and iron oxide (red).

In Comparative Example 5, an insulating coating film having a thickness of 20 µm was formed using, as the insulating coating material, a coating material containing a fluororesin emulsion as the coating film forming material and having been toned with titanium oxide and iron oxide (yellow).

In Comparative Example 6, an insulating coating film having a thickness of 1000 µm was formed using, as the insulating coating material, a coating material containing an acrylic silicone emulsion as the coating film forming material and 2.0 parts by mass of particles made of methyl acrylate and having an average particle size of 50 µm and an average hollow ratio of 0% (solid), and having been toned with titanium oxide.

Note that, in order to examine the thermal insulation effect provided by toning, the color tones of the coating materials of Examples 1 to 3 and 6, and Comparative Examples 1 to 3 and 6 were matched with one another using titanium oxide. Likewise, the color tones of the coating materials of Example 4 and Comparative Example 4 were matched with one another using titanium oxide and iron oxide (red), and the color tones of the coating materials of Example 5 and Comparative Example 5 were matched with one another using titanium oxide and iron oxide (yellow).

Further, in order to examine the design effect, the inorganic boards of Examples 1 to 5 and Comparative Examples 1 to 5 had the same flat pattern, and the inorganic boards of Example 6 and Comparative Example 6 had the same brick pattern.

The thermal insulation effect testing was performed on the building boards of Examples 1 to 6 and Comparative Examples 1 to 6. Lamp irradiation was used as the testing method. More specifically, the surface of each building board was irradiated with light using a halogen lamp of 100 V and 150 W disposed at a position 10 cm away from the surface of the building board. Then, at the time point at which the irradiation was continuously performed for 10 minutes, the surface temperature of the building board was measured using a radiation thermometer. The results are also shown in Table 1.

Furthermore, the building boards of Examples 1 to 6 and Comparative Examples 1 to 6 were checked for their appearance. Specifically, the surface state of the insulating coating film of each building board was visually observed. The building boards that had an insulating coating film having a flat surface and successfully represented the irregular pattern of the inorganic board were rated as "good", and the building boards that either had an insulating coating film having a non-flat surface or failed to represent the irregular pattern of the inorganic board were rated as "poor". Additionally, using a hand-held gloss meter "Gloss Checker IG-320" manufactured by HORIBA, Ltd., the gloss values of arbitrarily selected five locations of the surface of the insulating coating film of each building board were measured, and an average value was determined. Then, the building boards having an average gloss value of 20 or less were rated as "good", and the rest of the building boards were rated as "poor". The results are also shown in Table 1.

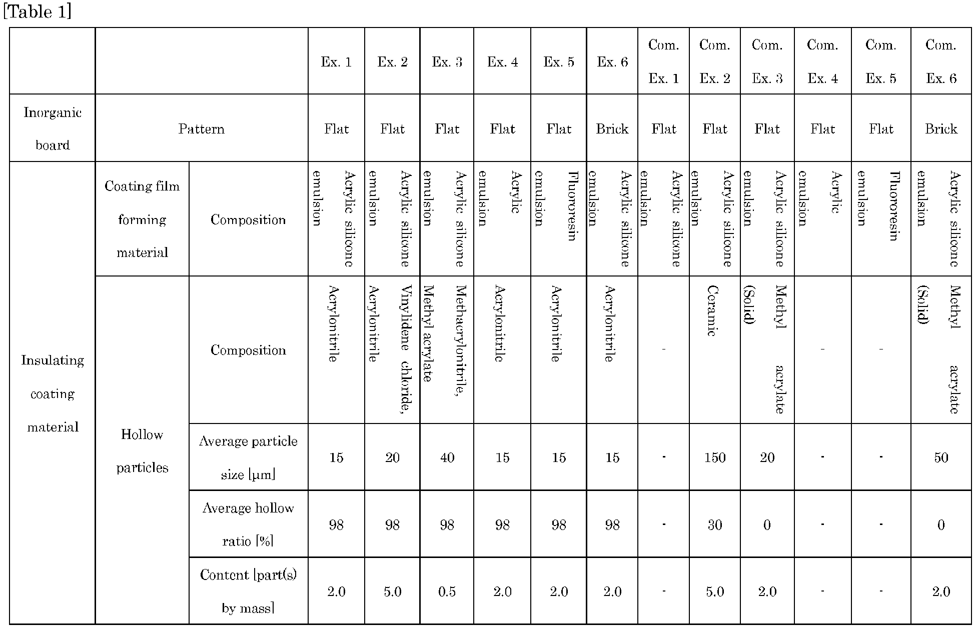

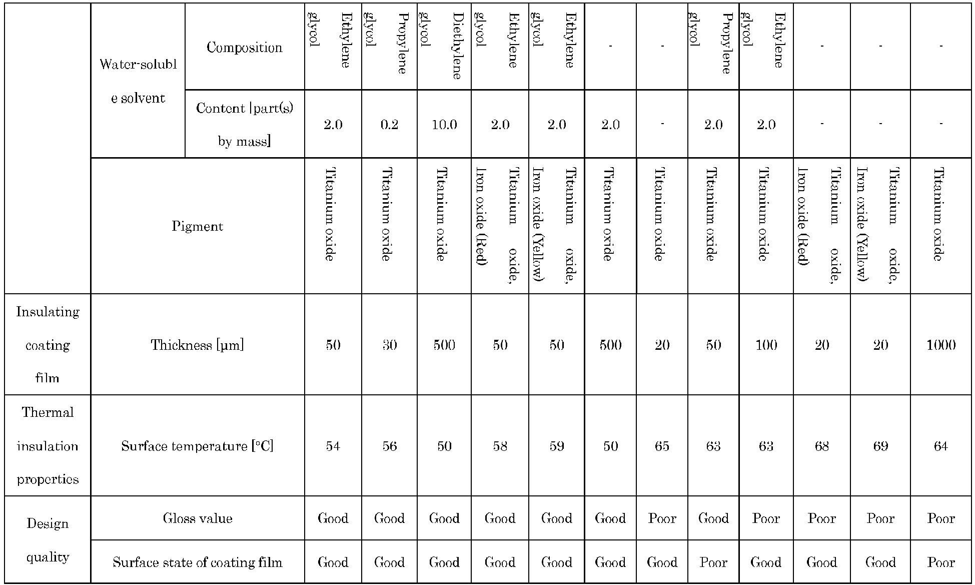

In Table 1, the hollow particle (solid particle) content and the water-soluble solvent content are expressed in parts by mass per 100 parts by mass of the solid content of the coating material. Additionally, the average hollow ratio of the hollow particles (solid particles) is expressed in volume percentage with respect to the solid particles (hollow particles).

As can be seen from Table 1, the surface temperatures of Comparative Examples 1 to 6 reached 63 to 69°C, whereas the surface temperatures of Examples 1 to 6 fell within the range of 50 to 59°C.

Further, a comparison of the inorganic coating materials having the same color tone showed that the surface temperatures of Comparative Examples 1 to 3 reached 63 to 65°C, whereas the surface temperatures of Examples 1 to 3 fell within the range of at 50 to 56°C. Likewise, the surface temperature of Comparative Example 4 reached 68°C, whereas the surface temperature of Example 4 was kept within 58°C, and the surface temperature of Comparative Example 5 reached 69°C, whereas the surface temperature of Example 5 was kept within 59°C.

That is, it can be said that the temperature increase of the building boards can be reliably suppressed, thus enhancing their thermal insulation properties.

Additionally, the gloss values of Comparative Examples 1 and 3 to 5 were rated as "poor" and the surface state of the coating film of Comparative Example 2 was rated as "poor" (the surface was irregular as if it was rough skin). In contrast, both the gloss values and the surface states of the coating films of Examples 1 to 5 were rated as "good", indicating that the surfaces of the coating films were smooth.

Furthermore, the surface state of the coating film of Comparative Example 6 was rated as "poor", indicating that the irregular pattern of the inorganic board failed to be represented, whereas the surface state of the coating film of Example 6 was rated as "good", indicating that the irregular pattern of the inorganic board was successfully represented.

Although one embodiment of the present invention has been described above, the present invention is not limited to the embodiment and various modifications may be made thereto within the scope of the invention as defined in the appended claims. For example, a coating material containing a filler such as calcium carbonate, clay or acrylic beads, mat beads, a photostabilizer, or an ultraviolet absorber may also be used as the insulating coating material.

As described above, the present invention can provide a building board having excellent thermal insulation properties and design quality, and a method for producing the same.

## Claims

1. A building board comprising an inorganic board having a surface covered by an insulating coating film containing a coating film forming material and organic hollow particles,
wherein the organic hollow particles have an average particle size in the range of 5 to 50 µm and an average hollow ratio of 80% or more, and
the insulating coating film contains 0.01 to 5.0 parts by mass of the organic hollow particles per 100 parts by mass of solid content thereof, and has an average thickness of 5 to 500 µm.

2. The building board according to claim 1,
wherein the insulating coating film is formed as an outermost layer in the building board.

3. The building board according to claim 1,
wherein the organic hollow particles comprise at least one of acrylonitrile, methacrylonitrile, vinylidene chloride, acrylic acid ester, and styrene.

4. The building board according to claim 1,
wherein the insulating coating film contains a water-soluble solvent.

5. The building board according to claim 4,
wherein the water-soluble solvent comprises at least one of a glycol-based solvent and a glycol ether-based solvent.

6. The building board according to claim 1,
wherein the inorganic board is a ceramic siding board.

7. A method for producing a building board, comprising: applying, onto a surface of an inorganic board, an insulating coating material containing a coating film forming material and organic hollow particles; and drying the insulating coating material to form an insulating coating film,
wherein a coating material containing 0.01 to 5.0 parts by mass of organic hollow particles having an average particle size in the range of 5 to 50 µm and an average hollow ratio of 80% or more, per 100 parts by mass of solid content of the coating material is used as the insulating coating material, and
the coating material is dried such that the insulating coating film has an average thickness of 5 to 500 µm.

8. The method for producing a building board according to claim 7,
wherein the insulating coating film is formed on an outermost side in the building board.

9. The method for producing a building board according to claim 7,
wherein the organic hollow particles comprise at least one of acrylonitrile, methacrylonitrile, vinylidene chloride, acrylic acid ester, and styrene.

10. The method for producing a building board according to claim 7,
wherein the insulating coating material contains a water-soluble solvent.

11. The method for producing a building board according to claim 10,
wherein the water-soluble solvent comprises at least one of a glycol-based solvent and a glycol ether-based solvent.

12. The method for producing a building board according to claim 7,
wherein a ceramic siding board is used as the inorganic board.
